# EUROPÄISCHE PATENTSCHRIFT

(11) **EP 0 965 029 B1**
(45) Veröffentlichungstag und Bekanntmachung des Hinweises auf die Patenterteilung: **26.06.2002**
(21) Anmeldenummer: 98913680.9
(22) Anmeldetag: 06.03.1998
(51) Int. Cl.: F42C 19/08, C08G 18/10

(54) **ZÜNDMITTELELEMENT MIT POLYURETHAN-SCHUTZLACK**
DETONATING AGENT ELEMENT WITH POLYURETHANE PROTECTING LACQUER
ELEMENT DE MISE A FEU DOTE D'UN VERNIS PROTECTEUR EN POLYURETHANE

(30) Priorität: 07.03.1997 DE 19709291
(43) Veröffentlichungstag der Anmeldung: 22.12.1999
(73) Patentinhaber: Dynamit Nobel GmbH Explosivstoff- und Systemtechnik, 53840 Troisdorf (DE)
(72) Erfinder: GESSEL, Uwe, D-53842 Troisdorf (DE)
(74) Vertreter: Uppena, Franz, Dr.
(86) Internationale Anmeldenummer: EP9801327
(87) Internationale Veröffentlichungsnummer: WO9840692

(56) Entgegenhaltungen:
- EP-A- 0 475 207
- GB-A- 2 055 869
- US-A- 3 901 852
- US-A- 4 412 033
- US-A- 4 520 042

## Beschreibung

Gegenstand der vorliegenden Erfindung ist ein Zündmittelelement, das mit einem Schutzlack versehen ist.

Im militärischen Bereich werden die meisten Zündmittelelemente bei der Qualifikation einem Klimatest unterzogen, bei dem die Komponenten über einen Zeitraum von vier Wochen bei einer Luftfeuchtigkeit von annähernd 100 % wechselnden Temperaturen zwischen -54°C und +71°C ausgesetzt werden (Temperatur-Wechsellagerung). Nur solche Zündmittelelemente, die nach dieser Behandlung noch voll funktionsfähig sind, sind für den Einsatz im militärischen Bereich qualifiziert.

Um dies zu gewährleisten, werden Zündmittelelemente, beispielsweise Verzögerungsdetonatoren oder Anstichelemente, üblicherweise an der Abfeuerungsseite mit einem Schutzlack versehen. Dieser soll das Eindringen von Feuchtigkeit verhindern, ohne die Eigenschaften des Zündmittels zu beeinträchtigen.

Der bisher verwendete Schutzlack basiert auf Nitrocellulose. Er besteht aus einem Grundlack, der mit Chrom-III-oxid versetzt und mit Nitrocellulose-Verdünnung auf die gewünschte Viskosität eingestellt wird. Dieser eingestellte Lack wird, bevor er eingesetzt wird, noch mit einem Entschäumer versetzt. Der Grundlack setzt sich zusammen aus handelsüblicher Collodiumwolle, die mit Ethanol angefeuchtet wird und mit einem Polyvinylether in Toluol, Dibutylphthalat, Butanol, Ethylacetat, Butylacetat und Toluol abgemischt wird.

Den oben erwähnten extremen Prüfbedingungen hält der NC-Schutzlack nicht stand. Anstichelemente, die zur Steigerung der Anstichempfindlichkeit Tetrazen enthielten und mit dem NC-Lack geschützt worden waren, wurden schon nach wenigen Tagen unter den obengenannten Prüfbedingungen zerstört. Zündmittelelemente, die halogenhaltige Verbindungen enthielten, zeigten starke Ausblühungen am Gehäuse. Die eindringende Feuchtigkeit begünstigte Zersetzungsreaktionen der Bestandteile, insbesondere des Tetrazens und der halogenhaltigen Verbindungen. Am Ende des Tests waren die meisten Zündmittelelemente vollständig zerstört.

Aufgabe der vorliegenden Erfindung war die Bereitstellung von Zündmittelelementen, die diese Prüfanforderungen erfüllen.

Gelöst wurde diese Aufgabe durch Zündmittelelemente, die durch die Merkmale des Hauptanspruchs gekennzeichnet sind. Vorzugsweise Ausgestaltungen werden durch die Unteransprüche charakterisiert.

Erfindungsgemäß eingesetzt werden kann ein Schutzlack aus Polyurethan, dessen Ausgangsverbindung ein 1,2- oder 1,3-Diol aber auch ein Polybutadien (HTPB), Polyesterpolyol oder Polyetherpolyol mit endständigen Hydroxylgruppen sein kann. Als Verknüpfungsreagentien bzw. Härter können Diisocyanate eingesetzt werden. Als Ausgangsverbindung wird bevorzugt das 2-Ethylhexan-1,3-diol, als Diisocyanate werden bevorzugt Hexamethylendiisocyanat, Phenylen-1,4-diisocyanat, Toluylen-2,4-diisocyanat, 2,6-Biphenyl-4,4'-diisocyanat, Diphenylmethan-4,4'-diisocyanat oder Naphthalin-1,5-diisocyanat, besonders bevorzugt wird Diphenylmethan-4,4'-diisocyanat eingesetzt.

Dem Schutzlack können gegebenenfalls noch Hilfs- und/oder Zusatzstoffe beigemischt werden, die dem Fachmann geläufig sind. Hierzu gehören die gängigen Polymerisationsmoderatoren bzw. -katalysatoren, beispielsweise tert. Amine und zinnorganische Verbindungen, Füll- bzw. Streckmittel, beispielsweise Aluminiumsilikat und CaCO₃, Alterungs- und Flammschutzmittel, Ruß, Antioxidantien und Pigmente.

Wird als Ausgangsverbindung 2-Ethylhexan-1,3-diol und als Härter Diphenylmethan-4,4'-diisocyanat eingesetzt, werden die Komponenten vorzugsweise im Verhältnis 5:1 (Ausgangsverbindung: Diisocyanat) vermischt. Das Mischungsverhältnis ist abhängig von den eingesetzten Komponenten. Sichergestellt sein muß, daß der erfindungsgemäß eingesetzte Schutzlack ausreichend dünnflüssig ist, um ihn problemlos verarbeiten zu können, ohne daß die Schutzlackschicht bei der Aushärtung Risse bekommt. Das optimale Mischungsverhältnis läßt sich durch einfache Versuche ermitteln.

Verwendet wird der Schutzlack erfindungsgemäß in an sich bekannter Weise. Er kann beispielsweise auf das Zündmittelelement, vorzugsweise an der Anfeuerungsseite, aufgespritzt oder aufgestrichen werden. Auch möglich ist es, das Zündmittelelement in den Schutzlack einzutauchen. Die Dicke der Schutzlackschicht richtet sich nach dem verwendeten Schutzlack. Gewünschtenfalls können auch mehrere Schichten aufgetragen werden, wobei auch verschiedene Lacke verwendet werden können.

Sämtliche, erfindungsgemäß mit dem Schutzlack versehenen Zündmittelelemente, auch die Anstichelemente, die zur Steigerung der Anstichempfindlichkeit Tetrazen enthielten und extrem feuchtigkeitsempfindlich sind, funktionierten nach dem oben beschriebenen 4-wöchigen Klimatest einwandfrei.

Zündmittelelemente, die erfindungsgemäß mit dem Schutzlack versehen werden können, sind beispielsweise Verzögerungsdetonatoren und Anstichelemente, doch sind auch andere Zündmittelelemente auf diese Weise zu schützen.

## Patentansprüche

1. Zündmittelelement, **dadurch gekennzeichnet, daß** es mit einem Polyurethan-Schutzlack beschichtet ist.

2. Zündmittelelement gemäß Anspruch 1, **dadurch gekennzeichnet, daß** für den Polyurethan-Schutzlack Ausgangsverbindungen aus der Gruppe der 1,2- oder 1,3-Diole, der Polybutadiene (HTPB), Polyesterpolyole oder Polyetherpolyole mit endständigen Hydroxylgruppen und als Verknüpfungsreagentien bzw. Härter Diisocyanate eingesetzt werden.

3. Zündmittelelement gemäß einem der Ansprüche 1 oder 2, **dadurch gekennzeichnet, daß** die Ausgangsverbindung 2-Ethylhexan-1,3-diol und das Diisocyanat aus der Gruppe Hexamethylendiisocyanat, Phenylen-1,4-diisocyanat, Toluylen-2,4-diisocyanat, 2,6-Biphenyl-4,4'-diisocyanat, Diphenylmethan-4,4'-diisocyanat oder Naphthalin-1,5-diisocyanat ausgewählt ist.

4. Zündmittelelement gemäß einem der Ansprüche 1 bis 3, **dadurch gekennzeichnet, daß** als Diisocyanat Diphenylmethan-4,4'-diisocyanat eingesetzt wird.

5. Zündmittelelement gemäß einem der Ansprüche 1 bis 4, **dadurch gekennzeichnet, daß** dem Polyurethan-Schutzlack Hilfs- und/oder Zusatzstoffe beigemischt sind.

6. Zündmittelelement gemäß Anspruch 1 bis 5, **dadurch gekennzeichnet, daß** das 2-Ethylhexan-1,3-diol und das Diphenylmethan-4,4'-diisocyanat im Verhältnis 5:1 eingesetzt wird.

7. Zündmittelelement gemäß einem der Ansprüche 1 bis 6, **dadurch gekennzeichnet, daß** das Zündmittelelement an der Abfeuerungsseite mit dem Polyurethan-Schutzlack versehen ist.

8. Zündmittelelement gemäß einem der Ansprüche 1 bis 7, **dadurch gekennzeichnet, daß** das Zündmittelelement mit mehreren Polyurethan-Schutzlackschichten versehen ist.

## Claims

1. Igniter element, **characterised in that** it is coated with a polyurethane protective lacquer.

2. Igniter element according to claim 1, **characterised in that** a pre-polymer from the group of 1,2- or 1,3-diols, polybutadienes (HTPB), polyesterpolyols or polyetherpolyols with terminal hydroxyl groups and bi- or tri functional diisocyanates as cross linking agents or hardeners are employed for the polyurethane protective lacquer.

3. Igniter element according to one of claims 1 or 2, **characterised in that** the pre-polymer is 2-ethylhexane-1,3-diol and the diisocyante is selected from the group hexamethylene diisocyanate, phenylene-1,4-diisocyanate, toluylene-2,4-diisocyanate, 2,6-biphenyl-4,4'-diisocyanate, diphenylmethane-4,4'-diisocyanate or naphthalene-1,5-diisocyanate.

4. Igniter element according to one of claims 1 to 3, **characterised in that** diphenylmethane-4,4'-diisocyanate is employed as diisocyanate.

5. Igniter element according to one of claims 1 to 4, **characterised in that** auxiliary and/or additive substances are mixed into the polyurethane protective lacquer.

6. Igniter element according to claim 1 to 5, **characterised in that** 2-ethylhexane-1,3-diol and diphenylmethan-4,4'-diisocyanate are employed in the ratio 5:1.

7. Igniter element according to one of claims 1 to 6, **characterised in that** the igniter element is provided with the polyurethane protector lacquer on the firing side.

8. Igniter element according to one of claims 1 to 7, **characterised in that** the igniter element is provided with several polyurethane protective lacquer layers.

## Revendications

1. Elément de mise à feu, **caractérisé en ce qu'**il est revêtu d'un vernis protecteur polyuréthane.

2. Elément de mise à feu selon la revendication 1, **caractérisé en ce qu'**on utilise pour le vernis protecteur polyuréthane un pré-polymère appartenant au groupe des 1,2 ou 1,3 diols, des poly-butadiènes (HTPB), des polyester-polyols ou des polyether-polyoles avec des groupes terminaux hydroxyles et, comme agents de liaison ou comme réactifs de réticulation ou comme durcisseurs, des di-isocyanates bi- ou trifonctionnels.

3. Elément de mise à feu selon une des revendications 1 ou 2, **caractérisé en ce qu'**on choisit le pré-polymère 2-éthylhexane-1,3-diol et le di-isocyanate parmi le groupe hexaméthylène di-isocyanate, phénylène-1,4-di-isocyanate,toluylène-2,4-di-isocyanate, 2,6-biphényl-4,4'-di-isocyanate, diphénylméthane-4,4'-di-isocyanate, naphtaline-1,5-diisocyanate.

4. Elément de mise à feu selon une des revendications 1 à 3, **caractérisé en ce qu'**on utilise comme diisocyanate du diphénylméthane-4,4'-diisocyanate.

5. Elément de mise à feu selon une des revendications 1 à 4, **caractérisé en ce qu'**on ajoute au vernis protecteur polyuréthane, des adjuvants et/ou des additifs

6. Elément de mise à feu selon une des revendications 1 à 5, **caractérisée en ce qu'**on utilise le 2-éthylhexane-1,3-diol et le diphénylméthane-4,4'-di-isocyanate en un rapport de 5 :1.

7. Elément de mise à feu selon une des revendications 1 à 6, **caractérisée en ce que** l'élément de mise à feu est pourvu du vernis protecteur polyuréthane côté mise à feu.

8. Elément de mise à feu selon une des revendications 1 à 7, **caractérisée en ce que** l'élément de mise à feu est pourvu de plusieurs couches de vernis protecteur polyuréthane
